# FASCICULE DE BREVET EUROPEEN

(11) **EP 2 805 029 B1**
(45) Date de publication et mention de la délivrance du brevet: **06.01.2016**
(21) Numéro de dépôt: 13704149.7
(22) Date de dépôt: 11.01.2013
(51) Int. Cl.: F01D 25/16, F02C 3/10

(54) **Support pour au moins un palier de section chaude de turbomoteur, et turbomoteur associé**
Halterung für wenigstens einen Lager einer heissen Stufe eines Turbotriebwerks und zugehöriges Turbotriebwerk
Support for at least one bearing of the hot section of a turboengine and corresponding turboengine

(30) Priorité: 20.01.2012 FR 1250574
(43) Date de publication de la demande: 26.11.2014
(73) Titulaire: Turbomeca, 64510 Bordes (FR)
(72) Inventeur: PERRONNET, Jean-François, F-64000 Pau (FR); BREINING, Jean-Luc, F-64000 Pau (FR); SILVA, Manuel, F-64110 Gelos (FR)
(74) Mandataire: Calvo de Nó, Rodrigo
(86) Numéro de dépôt international: PCT/FR2013/050068
(87) Numéro de publication internationale: WO 2013/107966

(56) Documents cités:
- EP-A2- 1 921 007
- EP-A2- 2 169 182
- GB-A- 1 010 401
- GB-A- 1 428 091
- JP-A- 3 189 304
- US-A- 3 536 414
- US-B1- 6 353 789

## Description

### Arrière-plan de l'invention

La présente invention concerne le domaine des turbomoteurs, et en particulier un support pour au moins un palier de section chaude de turbomoteur, ce support comportant un moyeu central incorporant un siège extérieur de palier pour recevoir le palier, un segment annulaire de carter autour du moyeu central, et une pluralité de bras radiaux reliant ledit moyeu central audit segment annulaire de carter.

Par « turbomachine », on entend, dans le présent contexte, toute machine permettant la conversion de l'énergie thermique d'un fluide de travail en énergie mécanique par détente dudit fluide de travail dans une turbine. Dans la description qui suit, les termes "amont" et "aval" sont définis par rapport au sens de circulation normal du fluide de travail dans la turbomachine.

Typiquement, dans une telle turbomachine, le fluide de travail est contenu dans une veine annulaire entre un carter et au moins un arbre rotatif autour d'un axe central. Ledit arbre rotatif est solidaire en rotation d'au moins une roue de la turbomachine traversé par ladite veine annulaire de fluide. Afin de soutenir la roue, l'arbre rotatif est soutenu par au moins un palier, lequel est à son tour soutenu par un support de palier avec une pluralité de bras traversant radialement la veine de fluide pour relier le palier au carter de la turbomachine.

Parmi les différents types de turbomachine, on compte notamment les turbomoteurs. Dans un tel turbomoteur, au moins une roue de turbine située en aval d'un compresseur et une chambre de combustion est couplée à un arbre de sortie pour récupérer l'énergie mécanique produite par le turbomoteur. Ceci distingue les turbomoteurs notamment des turboréacteurs, dans lesquels la récupération de l'énergie mécanique s'effectue principalement par la détente des gaz de combustion dans une tuyère de réaction. En conséquence, dans la section chaude d'un turbomoteur, c'est-à-dire, dans la chambre de combustion et en aval de celle-ci, les contraintes thermiques sont élevées à cause des forts gradients de température par rapport à la taille des turbomoteurs. Notamment les paliers et supports de paliers situés dans la section chaude sont soumis à des contraintes thermomécaniques particulièrement élevées.

Afin de répondre aux contraintes de dynamique des lignes d'arbres et maitriser l'excentration des turbines sous manoeuvres, il est souhaitable d'obtenir une grande rigidité radiale des supports de palier, même à des hautes températures. Toutefois, une grande rigidité du support de palier peut avoir des répercussions négatives sur sa durée de vie.

Dans le brevet britannique GB 1,010,401, un support de palier de section chaude de turbomachine a été proposé, dans lequel un moyeu central est suspendu d'un segment annulaire de carter de la turbomachine par des tiges inclinées en direction radiale et tangentielle. Toutefois, afin d'accommoder des efforts thermomécaniques entre le moyeu et le segment annulaire de carter, les extrémités de ces tiges sont articulées. En outre, les tiges sont protégées par des carénages tubulaires dons les extrémités extérieures peuvent légèrement se déplacer longitudinalement par rapport au segment annulaire de carter afin d'accommoder ces mêmes efforts thermomécaniques. En conséquence, ce support de palier présente une très grande complexité, ce dont dérivent des coûts élevés de production et d'entretien.

### Objet et résumé de l'invention

L'invention vise à proposer un support pour au moins un palier de section chaude de turbomoteur qui permette d'obtenir une rigidité radiale et en flexion élevée, même à des hautes températures, avec toutefois une bonne durée de vie et une grande simplicité.

Pour cela, dans au moins un mode de réalisation de l'invention, lesdits bras radiaux sont inclinés en direction axiale et en direction tangentielle et intégrés avec le moyeu central et le segment annulaire de carter en une seule pièce monobloc. On entend par inclinaison en direction axiale, dans ce contexte, une inclinaison par rapport à la direction radiale dans un plan longitudinal aligné avec l'axe central du palier. On entend par inclinaison en direction tangentielle, dans ce contexte, une inclinaison par rapport à la direction radiale dans un plan transversal perpendiculaire à l'axe central du palier.

Grâce à l'inclinaison tangentielle des bras et à leur intégration en une seule pièce monobloc avec le moyeu central et le segment annulaire de carter, ces bras transmettent une partie des charges radiales du palier en flexion, plutôt qu'uniquement en traction-compression comme les tiges du support selon GB 1,010,401, évitant ainsi notamment un poinçonnement radial du segment annulaire du carter aux emplantures des bras radiaux sur celui-ci. D'autre part, l'inclinaison axiale renforce les bras en flexion par rapport aux charges radiales, permettant encore un gain sensible de la rigidité radiale du support. On peut ainsi obtenir un support de palier hautement rigide avec toutefois une bonne durée de vie même dans environnement thermomécanique aussi exigeant que celui de la section chaude d'un turbomoteur.

En particulier, le support peut comporter en outre au moins une bride de fixation sur une extrémité axiale dudit segment annulaire de carter, et chaque bras radial être incliné axialement, à partir d'une emplanture sur ledit segment annulaire de carter, en direction de l'extrémité axiale présentant la bride de fixation. Il est ainsi possible d'obtenir un plus grand écart axial des bras radiaux, par rapport à ladite bride de fixation, au niveau de leurs emplantures sur le segment annulaire de carter qu'au niveau de leurs emplantures sur le moyeu central. Cet écart axial sur le segment annulaire du carter permet de mieux distribuer les charges mécaniques et gradients thermiques entre les bras radiaux et la bride de fixation, et ainsi augmenter la durée de vie du support, sans nuire à sa rigidité globale. Afin de mieux distribuer les efforts à proximité de l'emplanture de chaque bras sur le segment annulaire de carter, ladite bride de fixation peut être festonnée au droit de l'emplanture de chaque bras radial sur ledit segment annulaire de carter. On évite ainsi une trop grande rigidité du segment annulaire de carter à proximité de cette emplanture qui pourrait générer de trop importantes concentrations d'efforts. En outre, ladite bride de fixation peut présenter au moins un élément d'engagement positif, tel qu'un pion ou un orifice destiné à recevoir un pion complémentaire, pour la reprise d'efforts dans un plan perpendiculaire à un axe central du palier.

En particulier, afin d'éviter d'augmenter excessivement la surface frontale, la masse ou la flexibilité radiale du support, et afin d'éviter charger les bras radiaux uniquement en flexion, lesdits bras radiaux peuvent présenter un angle d'inclinaison tangentielle β non supérieur à 70°.

En particulier, afin d'éviter d'augmenter excessivement l'encombrement axial du support, et aussi afin d'éviter charger les bras radiaux trop fortement en flexion, lesdits bras radiaux peuvent présenter un angle d'inclinaison axiale α non supérieur à 45°.

En particulier, afin de diminuer la résistance du support à l'écoulement dans la veine de fluide, lesdits bras peuvent chacun avoir un profil aérodynamique avec un calage angulaire par rapport à une direction axiale. Le calage angulaire oriente le profil dans la direction d'un écoulement hélicoïdal de la veine de fluide afin de réduire sa résistance à l'écoulement, et augmente aussi la rigidité en flexion du profil dans le plan transversal. Plus particulièrement, lesdits profils aérodynamiques peuvent présenter un angle de calage Y non supérieur à 30°.

L'invention concerne également un turbomoteur comportant au moins un tel support de palier. En particulier, ledit support de palier peut être situé adjacent en aval d'une roue de turbine du turbomoteur et lesdits bras radiaux être inclinés axialement en direction amont à partir dudit segment de carter, ce qui permet de limiter le porte-à-faux entre les bras du support et la roue de turbine, tout en obtenant un certain écart axial entre les têtes d'aubes de la roue de turbine et l'emplanture des bras radiaux sur le segment annulaire de carter permettant de limiter les charges aérodynamiques vibratoires. Plus particulièrement, afin de fixer le support de palier à un carter de turbine, ledit support de palier peut comporter une bride de fixation située sur une extrémité axiale amont dudit segment annulaire de carter. Dans ce cas, l'inclinaison axiale des bras radiaux permet aussi d'obtenir un écart axial entre cette bride de fixation et les emplantures des bras radiaux sur le segment annulaire de carter, pour ainsi mieux distribuer les efforts thermiques et mécaniques entre la bride et les emplantures.

Toutefois, le support de palier peut aussi être alternativement situé adjacent en amont d'une roue de turbine du turbomoteur, par exemple.

En outre, ce turbomoteur peut en particulier comporter au moins un compresseur, une chambre de combustion, une première turbine à gaz de combustion couplée en rotation à l'au moins un compresseur par un premier arbre rotatif, et une deuxième turbine à gaz de combustion couplée en rotation à une sortie de puissance par un deuxième arbre rotatif, et ledit support de palier être un support de palier du deuxième arbre rotatif, ce qui permet de répondre aux efforts mécaniques et thermiques particulièrement élevés auxquels un support de palier de turbine libre est typiquement soumis dans un tel turbomoteur. Toutefois, alternativement ou en complément à ceci, au moins un support de palier du premier arbre rotatif peut aussi être configuré de la même manière, avec des bras inclinés axialement et tangentiellement, et présentant éventuellement un profil aérodynamique calé angulairement par rapport à une direction axiale.

### Brève description des dessins

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 est une coupe longitudinale schématique d'un turbomoteur ;
- la figure 2 est une coupe longitudinale schématique d'un support de palier suivant un mode de réalisation de l'invention ;
- la figure 2A est une coupe transversale d'un bras du support de palier de la figure 2 suivant la ligne IIA-IIA ;
- la figure 3 est une vue avant du support de palier de la figure 2 ;
- la figure 4 est une vue en perspective avant du support de palier de la figure 2 ; et
- la figure 5 est une vue de détail du support de palier de la figure 2.

### Description détaillée de l'invention

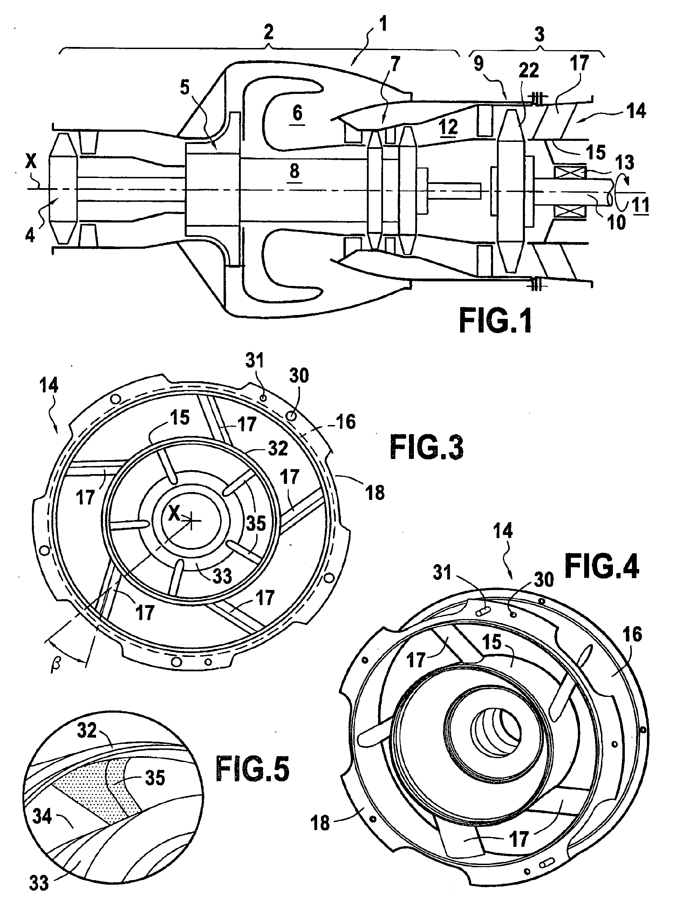

Un turbomoteur 1 est illustré sur la figure 1. Ce turbomoteur 1 comporte un segment générateur de gaz 2 et un segment turbine libre 3. Le segment générateur de gaz 2 comporte un compresseur axial 4, un compresseur radial 5, une chambre de combustion 6, une première turbine à gaz de combustion 7, et un premier arbre rotatif 8, avec un axe central X, et couplant en rotation les roues de la première turbine à gaz de combustion 7 et des compresseurs 4, 5, de telle manière que la rotation de cette dernière serve à actionner les compresseurs 4, 5 pendant le fonctionnement du turbomoteur 1. Le segment turbine libre 3, situé en aval du segment générateur de gaz 2, comprend une deuxième turbine à gaz de combustion 9, ou « turbine libre », et un deuxième arbre rotatif 10, aligné aussi avec l'axe central X et couplant la turbine libre 9 à une sortie de puissance 11. Ainsi, la rotation de la roue de la turbine libre 9 pendant le fonctionnement du turbomoteur 1 peut servir à actionner un dispositif externe, tel que, par exemple, un rotor d'hélicoptère.

Les arbres rotatifs 8,10 sont soutenus par des paliers, lesquels sont soutenus par des supports de paliers comportant des pluralités de bras radiaux traversant la veine de gaz 12. En particulier, dans le segment turbine libre 3 du mode de réalisation illustré, le deuxième arbre rotatif 10 est soutenu par au moins un palier 13, lequel est à son tour soutenu par un support de palier 14, situé adjacent en aval à la roue 22 de la turbine libre 9, et comportant, en une seule pièce monobloc, un moyeu central 15, un segment annulaire de carter 16, et une pluralité de bras radiaux 17, cinq par exemple, traversant la veine de gaz 12 pour relier le moyeu central 15 au segment annulaire de carter 16. Le palier 13 est directement reçu dans un siège extérieur de palier formé dans le moyeu central 15, et le segment annulaire de carter 16 présente, sur son extrémité axiale amont, une bride de fixation 18 pour fixer le support de palier 14 à un carter de turbine 19. Cette bride de fixation 18 présente non seulement des orifices 30 destinés à recevoir des boulons de fixation du support 14, mais aussi des pions protubérants 31, destinés à être reçus dans des orifices complémentaires dans une surface opposée à cette bride 18 afin d'obtenir un engagement positif permettant le positionnement précis du support 14, ainsi que la reprise d'efforts dans un plan transversal, notamment pour éviter un cisaillement desdits boulons.

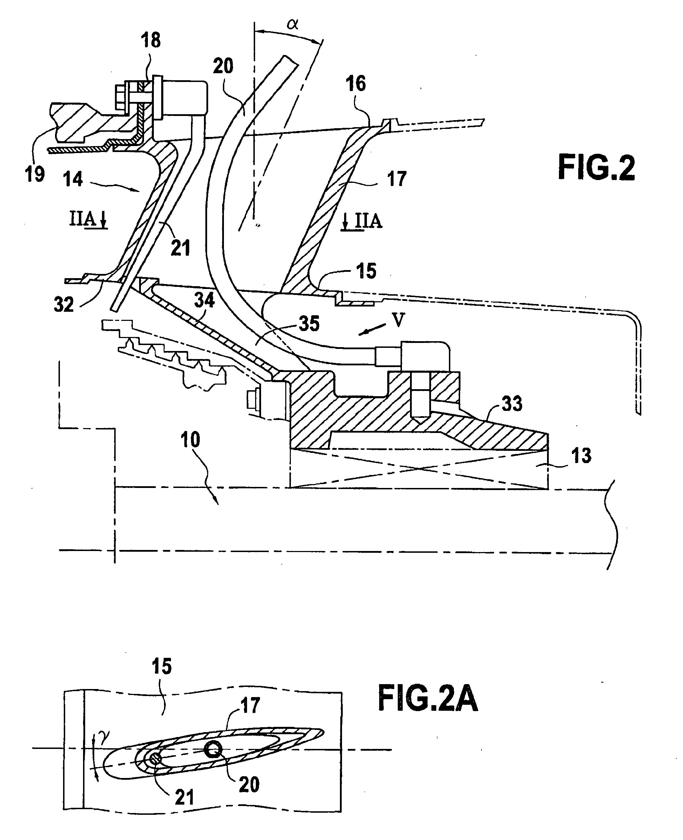

Ce support de palier 14 est illustré en plus grand détail sur les figures 2, 2A, et 3 à 5. On peut ainsi apprécier, sur la figure 2, un angle d'inclinaison α des bras radiaux 17 en direction axiale par rapport à un plan transversal et, sur la figure 3, un angle d'inclinaison β des bras radiaux 17 dans le plan transversal par rapport à une direction radiale. Dans le mode de réalisation illustré, l'angle d'inclinaison α est inférieur ou égal à 45°, tandis que l'angle d'inclinaison β est inférieur ou égal à 70°.

Chaque bras radial 17 est creux, permettant ainsi le passage d'un conduit 20 de fluide lubrifiant, ainsi que d'un capteur 21 de rupture de la roue de turbine 22. Grâce à l'inclinaison axiale des bras radiaux 17, le porte-à-faux entre les emplantures intérieures des bras radiaux 17 et la roue de turbine 22 peut être minimisé, ce qui permet notamment de placer le capteur 21 particulièrement proche de la roue de turbine 22. D'autre part, aux emplantures extérieures des bras radiaux 17, l'écart axial par rapport à la bride de fixation 18, qui est comparativement raide et reste comparativement froide pendant le fonctionnement du turbomoteur 1, permet de mieux distribuer les efforts thermiques et mécaniques entre ces emplantures extérieures et la bride de fixation 18. En outre, cet écart axial permet aussi de séparer les emplantures extérieures des bras radiaux 17 des têtes d'aube 23 de la roue de turbine 22. Afin d'éviter une trop grande rigidité du segment annulaire de carter 16 à proximité de ces emplantures extérieures, la bride de fixation 18 est festonnée au droit de celles-ci.

Grâce à l'inclinaison tangentielle des bras radiaux 17, visible sur la figure 3, les charges radiales du palier 13 ne sont pas transmises uniquement en traction-compression par les bras radiaux 17, mais partiellement en flexion, ce qui permet d'éviter un poinçonnement du segment annulaire de carter 16 aux emplantures extérieures des bras radiaux 17.

Tournant désormais vers la figure 2A, on y peut apprécier comment chaque bras radial 17 présente un profil aérodynamique avec un axe principal calé angulairement par rapport à la direction axiale. Dans le mode de réalisation illustré, l'angle Y de calage du profil est égal ou inférieur à 30°. Il peut ainsi, par exemple, aligner l'axe principal du profil avec la direction d'écoulement des gaz en aval de la roue de turbine 22, réduisant de cette manière la résistance des bras radiaux 17 à cet écoulement. En même temps, ce calage augmente la rigidité des bras radiaux en flexion dans un plan transversal du support de palier 14.

Le moyeu central 15 comporte un anneau extérieur 32 où sont situées des emplantures des bras radiaux 17, un anneau intérieur 33 formant ledit siège extérieur du palier 13, et une paroi conique 34 reliant lesdits anneaux extérieur et intérieur 32,33 du moyeu central 15. Afin de limiter la masse du moyeu central 15, ces anneaux extérieur et intérieur 32, 33, et surtout la paroi conique 34, peuvent être relativement minces. Afin de néanmoins assurer la rigidité du moyeu central 15, cette paroi conique 34 présente toutefois des nervures radiales 35 comme illustré en particulier sur la figure 5.

En fonctionnement, le support de palier 14 peut être soumis à des températures entre 400 et 700°C, typiquement plus élevées au centre de la veine de gaz que dans ses régions radialement intérieure et extérieure. Malgré cela, avec par exemple un alliage réfractaire à base de nickel ou de cobalt, il est possible d'obtenir, avec la géométrie illustrée et les dimensions typiques d'un turbomoteur, des rigidités radiales de l'ordre de 20000 à 80000 N/m, et plus particulièrement entre 60000 et 70000 N/m, tout en assurant une bonne durée de vie, par exemple d'au moins 6400 heures de fonctionnement.

Quoique la présente invention ait été décrite en se référant à un exemple de réalisation spécifique, il est évident que des différentes modifications et changements peuvent être effectués sur ces exemples sans sortir de la portée générale de l'invention telle que définie par les revendications. Par conséquent, la description et les dessins doivent être considérés dans un sens illustratif plutôt que restrictif.

## Revendications

1. Support (14) pour au moins un palier (13) de section chaude de turbomoteur, comportant au moins un moyeu central (15) incorporant un siège extérieur de palier pour recevoir ledit palier (13), un segment annulaire de carter (16) autour du moyeu central (15), et une pluralité de bras radiaux (17) reliant ledit moyeu central (15) audit segment annulaire de carter (16) et inclinés en direction axiale et en direction tangentielle, **caractérisé en ce que** lesdits bras radiaux (17) sont intégrés avec le moyeu central (15) et le segment annulaire de carter (16) en une seule pièce monobloc.

2. Support (14) suivant la revendication 1, comportant en outre au moins une bride de fixation (18) sur une extrémité axiale dudit segment annulaire de carter (16), chaque bras radial (17) étant incliné axialement, à partir d'une emplanture sur ledit segment annulaire de carter (16), en direction de l'extrémité axiale présentant la bride de fixation (18).

3. Support (14) suivant la revendication 2, dans lequel ladite bride de fixation (18) est festonnée au droit de l'emplanture de chaque bras radial (17) sur ledit segment annulaire de carter (16).

4. Support (14) suivant l'une quelconque des revendications 2 ou 3, dans lequel ladite bride de fixation (18) présente au moins un élément d'engagement positif (31) pour la reprise d'efforts dans un plan perpendiculaire à un axe central du palier.

5. Support (14) suivant l'une quelconque des revendications précédentes, dans lequel ledit moyeu central (15) comporte un anneau extérieur (32) où sont situées des emplantures des bras radiaux (17), un anneau intérieur (33) formant ledit siège extérieur, et une paroi conique (34) reliant lesdits anneaux extérieur et intérieur du moyeu central (15).

6. Support (14) suivant la revendication 5, dans lequel ladite paroi conique (34) présente des nervures radiales (35).

7. Support (14) suivant l'une quelconque des revendications 1 à 6, dans lequel lesdits bras radiaux (17) présentent un angle d'inclinaison tangentielle β non supérieur à 70°.

8. Support (14) suivant l'une quelconque des revendications 1 à 7, dans lequel lesdits bras radiaux (17) présentent un angle d'inclinaison axiale α non supérieur à 45°.

9. Support (14) suivant l'une quelconque des revendications 1 à 8, dans lequel lesdits bras radiaux (17) ont chacun un profil aérodynamique avec un calage angulaire par rapport à une direction axiale.

10. Support (14) suivant la revendication 5, dans lequel lesdits profils aérodynamiques présentent un angle de calage Y non supérieur à 30°.

11. Turbomoteur (1) comportant au moins un support (14) suivant l'une quelconque des revendications précédentes.

12. Turbomoteur (1) suivant la revendication 11, dans lequel ledit support (14) est situé adjacent en aval d'une roue de turbine du turbomoteur (1) et lesdits bras radiaux (17) sont inclinés axialement en direction amont à partir dudit segment annulaire de carter (16).

13. Turbomoteur (1) suivant la revendication 12, dans lequel ledit support (14) comporte une bride de fixation (18) située sur une extrémité axiale amont dudit segment annulaire de carter (16).

14. Turbomoteur (1) suivant l'une quelconque des revendications 11 à 13, comportant au moins un compresseur (4,5), une chambre de combustion (6), une première turbine à gaz de combustion (7) couplée en rotation à l'au moins un compresseur (4,5) par un premier arbre rotatif (8), et une deuxième turbine à gaz de combustion (9) couplée en rotation à une sortie de puissance par un deuxième arbre rotatif (10), dans lequel ledit support monobloc (14) soutient au moins un palier (13) dudit deuxième arbre rotatif (10).

## Patentansprüche

1. Träger (14) für wenigstens ein Lager (13) eines heißen Abschnitts eines Turbomotors, umfassend wenigstens eine mittlere Nabe (15), die einen äußeren Lagersitz zur Aufnahme des Lagers (13) enthält, ein ringförmiges Gehäusesegment (16) um die mittlere Nabe (15) herum sowie eine Vielzahl von radialen Armen (17), welche die mittlere Nabe (15) mit dem ringförmigen Gehäusesegment (16) verbinden und in axialer Richtung und in tangentialer Richtung geneigt sind, **dadurch gekennzeichnet, dass** die radialen Arme (17) mit der mittleren Nabe (15) und dem ringförmigen Gehäusesegment (16) in ein einziges einstückiges Teil integriert sind.

2. Träger (14) nach Anspruch 1, ferner umfassend wenigstens einen Befestigungsflansch (18) an einem axialen Ende des ringförmigen Gehäusesegments (16), wobei jeder radiale Arm (17) ausgehend von einem Anschlussbereich an dem ringförmigen Gehäusesegment (16) in Richtung des den Befestigungsflansch (18) aufweisenden axialen Endes axial geneigt ist.

3. Träger (14) nach Anspruch 2, wobei der Befestigungsflansch (18) in Höhe des Anschlussbereichs eines jeden radialen Arms (17) an dem ringförmigen Gehäusesegment (16) ausgezackt ist.

4. Träger (14) nach einem der Ansprüche 2 oder 3, wobei der Befestigungsflansch (18) wenigstens ein Formschlusselement (31) zur Aufnahme von Kräften in einer Ebene senkrecht zu einer Mittelachse des Lagers aufweist.

5. Träger (14) nach einem der vorhergehenden Ansprüche, wobei die mittlere Nabe (15) einen Außenring (32), an dem sich Anschlussbereiche der radialen Arme (17) befinden, einen Innenring (33), der den äußeren Sitz bildet, sowie eine konische Wand (34), welche den Außenring und den Innenring der mittleren Nabe (15) verbindet, umfasst.

6. Träger (14) nach Anspruch 5, wobei die konische Wand (34) radiale Rippen (35) aufweist.

7. Träger (14) nach einem der Ansprüche 1 bis 6, wobei die radialen Arme (17) einen tangentialen Neigungswinkel β von nicht mehr als 70° aufweisen.

8. Träger (14) nach einem der Ansprüche 1 bis 7, wobei die radialen Arme (17) einen axialen Neigungswinkel α von nicht mehr als 45° aufweisen.

9. Träger (14) nach einem der Ansprüche 1 bis 8, wobei die radialen Arme (17) jeweils ein aerodynamisches Profil mit einer Winkeleinstellung gegenüber einer axialen Richtung aufweisen

10. Träger (14) nach Anspruch 5, wobei die aerodynamischen Profile einen Einstellwinkel γ von nicht mehr als 30° aufweisen.

11. Turbomotor (1), der wenigstens einen Träger (14) nach einem der vorhergehenden Ansprüche umfasst.

12. Turbomotor (1) nach Anspruch 11, wobei der Träger (14) benachbart stromab eines Turbinenrades des Turbomotors (1) gelegen ist und die radialen Arme (17) von dem ringförmigen Gehäusesegment (16) ausgehend in stromaufwärtiger Richtung axial geneigt sind.

13. Turbomotor (1) nach Anspruch 12, wobei der Träger (14) einen Befestigungsflansch (18), der an einem stromaufwärtigen axialen Ende des ringförmigen Gehäusesegments (16) gelegen ist, umfasst.

14. Turbomotor (1) nach einem der Ansprüche 11 bis 13, umfassend wenigstens einen Verdichter (4, 5), eine Brennkammer (6), eine erste Verbrennungsgasturbine (7), die mit dem wenigstens einen Verdichter (4, 5) über eine erste Drehwelle (8) drehgekoppelt ist, und eine zweite Verbrennungsgasturbine (9), die mit einem Leistungsausgang über eine zweite Drehwelle (10) drehgekoppelt ist, wobei der einstückige Träger (14) wenigstens ein Lager (13) der zweiten Drehwelle (10) trägt.

## Claims

1. A support (14) for at least one bearing (13) for a hot section of a turboshaft engine, the support comprising at least a central hub (15) incorporating an outer bearing seat for receiving said bearing (13), an annular casing segment (16) around the central hub (15), and a plurality of radial arms (17) connecting said central hub (15) to said annular casing segment (16), and inclined in an axial direction and in a tangential direction **characterized in that** said radial arms (17) are integrated as a single piece with the central hub (15) and with the annular casing segment (16).

2. A support (14) according to claim 1, further including at least one fastener flange (18) on an axial end of said annular casing segment (16), each radial arm (17) being inclined axially from a root on said annular casing segment (16) towards the axial end presenting the fastener flange (18).

3. A support (14) according to claim 2, wherein said fastener flange (18) is festooned in register with the root of each radial arm (17) over said annular casing segment (16).

4. A support (14) according to claim 2 or claim 3, wherein said fastener flange (18) presents at least one positive engagement element (31) for taking up forces in a plane perpendicular to a central axis of the bearing.

5. A support (14) according to any preceding claim, wherein said central hub (15) comprises an outer ring (32) where roots of the radial arms (17) are situated, an inner ring (33) forming said outer seat, and a conical wall (34) connecting together said outer and inner rings of the central hub (15).

6. A support (14) according to claim 5, wherein said conical wall (34) presents radial ribs (35).

7. A support (14) according to any one of claims 1 to 6, wherein said radial arms (17) present a tangential angle of inclination β that is not greater than 70°.

8. A support (14) according to any one of claims 1 to 7, wherein said radial arms (17) present an axial angle of inclination α that is not greater than 45°.

9. A support (14) according to any one of claims 1 to 8, wherein each of said radial arms (17) has a streamlined profile that is pitched at an angle relative to an axial direction.

10. A support (14) according to claim 5, wherein said streamlined profiles present a pitch angle γ that is not greater than 30°.

11. A turboshaft engine (1) including at least one support (14) according to any preceding claim.

12. A turboshaft engine (1) according to claim 11, wherein said support (14) is situated adjacent to and downstream from a turbine wheel of the turboshaft engine (1), and said radial arms (17) are axially inclined in an upstream direction from said annular casing segment (16).

13. A turboshaft engine (1) according to claim 12, wherein said support (14) includes a fastener flange (18) situated at an upstream axial end of said annular casing segment (16).

14. A turboshaft engine (1) according to any one of claims 11 to 13, comprising at least a compressor (4, 5), a combustion chamber (6), a first combustion gas turbine (7) coupled to rotate with at least one compressor (4, 5) by a first rotary shaft (8), and a second combustion gas turbine (9) coupled to rotate with a power takeoff by a second rotary shaft (10), wherein said single piece support (14) supports at least one bearing (13) of said second rotary shaft (10).
